# EUROPEAN PATENT APPLICATION

(11) **EP 2 272 313 A1**
(43) Date of publication of application: **12.01.2011**
(21) Application number: 09008931.9
(22) Date of filing: 08.07.2009
(51) Int. Cl.: A01B 79/02, A01C 23/04

(54) **A process to improve the nutrient contents of the top soil and high nutritional value of the crop by mixing sub soil in the water channel during flowering stage of the crop**

(71) Applicant: Chintala, Venkat Reddy, Hyderabad 500010 (IN)
(72) Inventor: Chintala, Venkat Reddy, Hyderabad 500010 (IN)
(74) Representative: Keilitz, Wolfgang

(57) **Abstract**

The invention relates to a process of improving the nutrients of top soil by digging a trench having a certain width and length, in the same land, receiving therefrom a volume of sub soil, mixing that sub soil in a water supply channel and laying the wet sub soil on the complete land which penetrates into the depleted pores through water and forms as a layer of new wet top soil.

## Description

### FIELD OF INVENTION:

The present invention relates to the field of soil sciences and particularly to the improvement of essential nutrient elements in the soil for improved plant growth, lower irrigation needs due to better retention of water, higher plant yields, with no or reduced pest attack.

The present invention is an improvement of the earlier filed EP 1765051, the entire content of which is incorporated herewith by reference, and which is directed to a process to enhance cereal production by restoring soil fertility of depleted soil systems. Depletion was viewed as a result of human-induced soil degradation as a consequence of over fertilization by demands of intensive cropping practices in successive seasons, soil erosion due to natural factors, improper water management and continuous cropping. The invention reduces the need for high inputs like chemical fertilizers and pesticides, restores inherent soil fertility, betters soil characteristics like Water Holding Capacity, clay content, low porosity resulting in high yields with better nutritive capability without unbalancing the fragile ecology of soil.

The present invention reduces the need for addition of high inputs like chemical fertilizers, restores soil fertility, better soil profiles and physical state and increases higher output of crop produce both in quantitative & qualitative terms.

### BACKGROUND OF THE INVENTION:

The soil can be viewed as a mixture of mineral and organic particles of varying size and composition concerning plant growth. The particles occupy about 50% of the soil's volume. The remaining soil volume, about 50%, is pore space, composed of pores of varying shapes and sizes. The pore spaces contain air and water and serve as channels for the movement of air and water. Roots anchored in soil support plants and roots absorb water and nutrients. For good plant growth, the root-soil environment should be free of inhibitory factors. The three essential things that plants absorb from the soil and use are: (1 ) water that is mainly evaporated from plant leaves, (2) nutrients for nutrition, and (3) oxygen for root respiration.

Plants need certain essential nutrient elements to complete their life cycle. No other element can completely substitute for these elements. At least 16 elements are currently considered essential for the growth of most vascular plants. Carbon, hydrogen, and oxygen are combined in photosynthetic reactions and are obtained from air and water. These three elements compose 90% or more of the dry matter of plants. The remaining 13 elements are obtained largely from the soil. Nitrogen(N), phoshorus(P), potassium(K), calcium(Ca), magnesium(Mg), and sulfur(S) are required to as the macronutrients. Elements required in considerably smaller amount, called micronutrients, are boron(B), chlorine(Cl), copper(Cu), iron(Fe), manganese(Mn), molybdenum(Mo),∼and zinc(Zn). Cobalt (Co) is a micronutrient that is needed to only some plants.

In nature, plants accommodate themselves to the supply of available nutrients. Seldom or rarely is a soil capable of supplying enough of the essential nutrients to produce high crop yields for any reasonable period of time after natural or sub-soil lands are converted to cropland. Thus, the use of animal manures and other amendments to increase soil fertility (increase the nutrient ions) are ancient soil management practices. Reported in Fundamentals of Soil Sciences by Henry D. Foth.8th Edition, 1990, John Wiley & Sons Inc.

Since these soils are cultivated for several times with seasonal crops continuously, the practice in recent times has been to increase the soil fertility or to increase the nutrient contents in the soil by using new organic and inorganic chemicals and products. The draw back of these products is that they supply only a specific nutrient content to the plants. In general, the plants require the nutrient contents in a conceptualization method. Therefore, it is known that soil with lower fertility levels, by over use of chemical fertilization can cause unbalance of organic matter, hardening of soil, and induces acceleration of destruction of organic matter. New incentives for ensuring higher productivity, improving quality of cereals without losses to soil ecosystems along with technology involving low input for farmers needs to be formulated if goals of sustainable agriculture of maximizing net benefits to society which it receives from agricultural production are to be harnessed (David Tilliman et al 2002, Nature 418 : 671 - 677 )

Through the usage of these organic and inorganic products, it is evident that the food grains grown are with high chemical content, which is harmful to the mankind on continuous consumption.

To over take the usage of these chemical products many have searched for the new ways of cultivation or farming. The only alternative is to again cultivate in a new piece of land where the soil is sub-soil, which contains all the macro and micronutrients sufficiently. This method is highly impossible as to cultivate every time in a new piece of land involves the laborious activities of shaping the fields, canal formation, plucking the weeds etc., every time they enter into the new lands. Further, to cultivate in new lands it includes the expense of purchase of the land every time.

Facing this hurdle every time, it is an accepted practice to cultivate in the same land that they acquire for the purpose of farming/cultivation. And when they cultivate the land and grow the crop every time they use all chemicals organic and inorganic to safe guard the crop from low yielding, shortfall of growth of the plants, higher duration etc. through which they supply the artificial nutrients to the crop which are required. Therefore, by cultivating the crops again and again in the same fields the farmers are now habituated their cultivation methods along with the usage of the chemical products which harm the mankind.

Thus, ecologically based management practices including practices for increasing efficiency, use of nitrogen, phosphorous, water for high crop yields is want of the day. This coupled with better nutritional levels of produce would help cope, the needs for health dimension of society. How can we accomplish dual objectives of improving yield levels and of preserving quality and quantity of ecosystem services provided by Earth's land and water resources along with low monetary inputs by grower? Several nations are providing incentives and policies in pursuit of sustainable agriculture ( Byerlee D 1996. World Dev 24: 697 - 718). Major change in production parameters are being voiced in at global levels. (Cassman KG 1999, Proc. National academy of Sciences, USA. 96:5952-5952) as current practices of cultivation have induced losses related to environmental degradation especially soils, emergence of several biotic stresses and lowering of stability of production levels of cereals like rice and wheat. Several researchers are working new, viable technologies to overcome some of these problems. (Pinstrop-Andersen and R.Pandya-Lorch, 1996. Environ. Conserv.23, 226-234; Cassman et al 1993, Plant Soil 155/156,359-362; Patent no: RU 2224398;2004-02-27,EPO).

The inventor here has practiced a new process of increasing the nutrient content in the soil to gain the high value of natural resources. This also includes the new process of cultivation or farming before the irrigation by which the soil gets a new strength as it regains the lost nutrients completely.

### OBJECTIVES OF THE INVENTION:

The invention is a process of increasing the nutrient contents in the soil to gain the high value of natural resources. Through this process the inventor claims extensive benefits and advantages.
1. The advantage of the inventor's process of increasing the nutrient content in soil makes the soil to restore nutritive value to depleted soils.
2. Another advantage of the inventor's process of increasing the nutrient content in soil makes the soil to regain the new strength in the soil.
3. Another advantage of the inventor's process of increasing the nutrient content in soil involves the non-usage of any chemical fertilizers and other inorganic products.
4. Another advantage of the inventor's process of increasing the nutrient content in soil involves extensive growth of the crop giving a very high yield.
5. Another advantage of the inventor's process of increasing the nutrient content in soil excludes the purchase of new land for every cultivation.
6. Another advantage of the inventor's process of increasing the nutrient content in soil is by not using or reduced usage of chemicals, the danger of contamination of ground water is solved.
7. Another advantage of the inventor's process of increasing the nutrient content in soil is getting high nutritive value of farm produce intern which reduces the need of diet supplements (artificial or natural).
8. Another advantage of the inventor's process of increasing the nutrient content in soil is to reduce the need of pesticides leading to safe farm produce with low toxicity levels.
9. Another advantage of the inventor's process of increasing the nutrient content in soil to control the weed growth in the crop as the weeds(weed seeds) present in the top soil are removed by this process.

Through the above advantages available to the mankind the inventor claims his invention as the novel, simple and useful to the every farmer/cultivator.

### SUMMARY OF THE INVENTION:

As per the package of practices the application of nitrogen is recommended during the flowering stage. However the inventor applied excavated sub-soil through the irrigation water at the rate one ton per acre with an objective to enhance the yield levels of the crop.

As stated above in the European Patent No.1765051, the inventor has observed that not only yield levels are enhanced, but also the nutrient content of the crop has drastically improved. Thereby the inventor opted to take the lab test of the rice produced through the method earlier claimed and by adding sub-soil through water at the time of flowering stage.

Now this land when is in the shape of a square or a rectangle is taken to a portion of 2.5 ft width and 4 ft depth length wise. This selected portion in the field/land is dug to the predetermined level of 4 ft. The soil which came out is store at the rear side of the dig/pit.

Subsequently, with a machine or manually the surface soil present in the selected total land is removed to a depth of 2" to 6" inches and the whole soil such removed is filled in the dig/pit.

After filling the dig/pit the fresh soil earlier removed from the dig/pit is placed in a water supply channel, so that the sub-soil gets soaked with water. The soaked sub-soil is then covered on the surface in the total land to a height of 4" to 6" inches in the place of the earlier removed surface soil. Now, the total land is covered with a new soil or sub-soil dug from the bottom at one selected place in the same piece of land selected for cultivation/farming.

Now after the new soil is covered, the surface is filled to a depth of 6" (approx) so that the bottom old soil is mixed with the new soil and a blending is taken place.

The results obtained from VIMTA LABS from MILLED RICE test report shows that the Content of Vitamin A is about 1242 IU, whereas the normal Carotene content is 0.00 µg as per the NUTRITIVE VALUE OF INDIAN FOODS by C. GOPALAN, B V RAMASHASTRI & S.C.BALASUBRAHMANIAN (Printed by National Institute for Nutrition, Year: 2007). This shows that there is a drastically enhancement of the nutrient levels in the crop grown as per the method disclosed.

Moreover, while the inventor has cultivated the WHEAT with the same method as disclosed with flood irrigation (three flood irrigations with 10 days intervals), the results of the lab shows the content of Vitamin A of about 1370 IU, whereas the normal Carotene content is 64 µg as per the NUTRITIVE VALUE OF INDIAN FOODS by C. GOPALAN, B V RAMASHASTRI & S.C.BALASUBRAHMANIAN (Printed by National Institute for Nutrition, Year: 2007). This shows that there is a drastically enhancement of the nutrient levels in the crop grown as per the method disclosed.

The inventor feels by this technique since there is no or reduced usage of chemicals, the danger of contamination of ground water which is a up-coming problem in this area is also reduced. It is a known fact that using chemical fertilizers increases the danger of chemicals getting leached into the ground water and tube well water in the areas, using the suggested methods of preparation the farmer strongly feels that natural resources are preserved, plants grow more vigorously due to better soil properties, texture, porosity, water holding capacity and due to high organic content built in the sub soil environment.

Thus increase in quantity and better quality produce is got by the farmer.

### DESCRIPTION OF THE INVENTION:

As the inventor himself is a farmer / cultivator he has described his invention in his words to explain the process of increasing the nutrient content in the soil even after several cultivations in the same piece land.

To describe the process in a specific manner, here the inventor takes a hectare of land for cultivation. This land historically evidence of land management is that is was tilled and cultivated several times and many crops is raised several times. This land after several cultivations is called as the soil having low nutrient contents as the nutrients are earlier absorbed by the previous crops raised in this filed/land.

As per the package of practices the application of nitrogen is recommended during the flowering stage. However the inventor applied excavated sub-soil through the irrigation water at the rate one ton per acre with an objective to enhance the yield levels of the crop.

As stated above in the European Patent No.1765051, the inventor has observed that not only yield levels are enhanced, but also the nutrient content of the crop has drastically improved. Thereby the inventor opted to take the lab test of the rice produced through the method earlier claimed and by adding sub-soil through water at the time of flowering stage.

The results obtained from VIMTA LABS from MILLED RICE test report shows that the Content of Vitamin A is about 1242 IU, whereas the normal Carotene content is 0.00 µg as per the NUTRITIVE VALUE OF INDIAN FOODS by C. GOPALAN, B V RAMASHASTRI & S.C.BALASUBRAHMANIAN (Printed by National Institute for Nutrition, Year: 2007). This shows that there is a drastically enhancement of the nutrient levels in the crop grown as per the method disclosed.

Moreover, while the inventor has cultivated the WHEAT with the same method as disclosed with flood irrigation (three flood irrigations with 10 days intervals), the results of the lab shows the content of Vitamin A of about 1370 IU, whereas the normal Carotene content is 64 µg as per the NUTRITIVE VALUE OF INDIAN FOODS by C. GOPALAN, B V RAMASHASTRI & S.C.BALASUBRAHMANIAN (Printed by National Institute for Nutrition, Year: 2007). This shows that there is a drastically enhancement of the nutrient levels in the crop grown as per the method disclosed.

In the present invention the inventor also gives the solution for the subsequent cultivations. In the next crop of cultivation the inventor has made the new trench next to the earlier one to get the new soil from the required depth. The next procedure of the removing the old soil and covering with sub-soil takes place.

With this process of the restoring soil fertility in depleted soils for every new cultivation, the same land is used to take the soil and cover in the same land. Moreover, if the total land is of 25' ft length the land can be used for a period of 10 crops approximately. And after which again the same procedure is continued from the starting where in with the period of 5-10 years the soil filled in the trenches regains the nutrient contents biologically.

It is important to note that no soil from any other external source has been put and the property of enhancing soil fertility was sourced from soil of the same plot/land. This is a unique case of ecological balancing without burdening natural resources.

The results of the both the soils are shown here:

| c | pH | EC | N/kgha-1 | P/kgha-1 | K/kgha-1 | Fe/kg ha-1 | Mn/kgha-1 | Cu/kgha-1 | Zn/kg-1 |
|---|---|---|---|---|---|---|---|---|---|
| Top Soil before sowing | 7.74 | 0.278dsm-1 | 177 | 17.9 | 288 | 2.46 | 4.29 | 0.91 | 1.35 |
| Sub-soil after application to field | 8.06 | 0.176dsm-1 | 186 | 51.5 | 298 | 4.81 | 10.92 | 10.01 | 4.05 |
| Sub-soil after harvest of wheat | 8.11 | 0.418 | 267 | 44.8 | 288 | 4.30 | 10.53 | 5.96 | 3.71 |

| | | | | | | | | | |
|---|---|---|---|---|---|---|---|---|---|
| EC: Electric conductivity, N : Nitrogen, K: Potassium, Fe: Ferrous, Mn: Manganese, Cu: Copper, Zn: Zinc | | | | | | | | | |

### EXAMPLES:

After the above process to increase the nutrient conditions of the soil in the cultivated land the inventor has practically studied by the under mentioned examples of cultivation;

### Practice for growing crop culture of rice:

### Soil Characters:

The soil was sandy loam locally known as chalka with a depth varying from 12 to 15 cms. Surfaceand sub surface soil samples were collected from the open field. Soil sample was also collected from a field to which 2 quintal castor cake + 100 kg bone meal plot'1 of 1285 m2 were added before transplanting paddy. The characters of these soils are given below:

### Variety of rice crop:

Rice variety BPT 5204 (locally available variety), popularly known as "Samba Mahsuri" with fine grain, good milling and cooking quality was grown in this field. The variety is of 150 days average yield ad is known to be susceptible to both the insect pests and diseases. Te average yield of the variety is 5.0 to 5.5 t ha'1 and it may reach upto 8.0 to 8.5 t ha'1 under favourable conditions.

### Raising the nursery:

The nursery of variety BPT 5204 was raised as per the recommendations. The nursery was sown on 18.07.2003. No inorganic fertilizers were applied to the nursery.

### Transplantation:

The seedlings of 40 days old were pulled from the nursery and transplanted in the well prepared main field @ 2 to 3 seedlings per hill at random. A uniform populationof about 45 hills in 1 m2 were maintained in the main field.

### Irrigation:

The rice crop was irrigated with bore well water. The farmer has kept the field semidry fewer days to minimize the irrigation and also to save water.

### Fertilizers:

The inventor claims that he has not applied any inorganic fertilizers to the rice crop. Only castor cake and bone meal (farm by product) were applied to the field to obtain produce. The application of basal dose is prior to sowing only. The particulars are given below:

| | |
|---|---|
| Area of the plot | : 1428 Sq Yards (1285 m2) |
| Castor cake | :200 kg |
| Bone meal | :100 kg |

The rice crop is transplanted into this field as per the recommended package of practices.

As per the package of practices the application of nitrogen is recommended during the flowering stage. However the inventor applied excavated sub-soil through the irrigation water at the rate one tonne per acre with an objective to enhance the yield levels of the crop.

No other fertilizer (chemical / organic) was applied.

Crop stand is vigorous, healthy and green. Physiologically, also crop is very active. No pest attack is observed. A prophylactic spray is given before kernel formation as other fields are infected.

The inventor recorded high yields of 10.31 t/ha as compared to expected average of 6.5 t/ha with fertilizers.

| RICE (BPT variety-ANGRAU) | Values obtained | Standard Values |
|---|---|---|
| Protein | 11.0g/100g | 7.00g/100g |
| Moisture | 8.74g/10g | 10.63g/100g |
| Yield | 10.31t/ha | 6.5t/ha |

| | | |
|---|---|---|
| ANGRAU: Acharya N.G.Ranga Agricultural Univeristy, Hyderabad, India released variety. Method of Testing: As per AOAC 17th Edition 2000 - Protein : 32.1.22(984.13). Standard results: Nimnaladevi et al, 2000, Genetic variability & Quality analysis, Bulletin of Grain Technology, vol.33, No.2, page 114-122. | | |

### Data on nutritive status of soils:

| S.No | Description on | pH | EC | N/k gha -1 | P/k gha -1 | K/kgh a-1 | Fe/k g ha-1 | Mn/kgh a-1 | Cu/kg ha-1 | Zn/kgh a-1 |
|---|---|---|---|---|---|---|---|---|---|---|
| | | | Dsm-1 | Kg ha-1 | | | Mg kgh a-1 | | | |
| 1 | Top Soil before sowing wheat | 7.74 | 0.278 | 177 | 17.9 | 288 | 2.46 | 4.29 | 0.91 | 1.35 |
| 2 | Sub-soil excavated | 8.06 | 0.176 | 186 | 51.5 | 298 | 4.81 | 10.92 | 10.01 | 4.05 |
| 3 | Sub-soil after spreading in the field and after crop | 8.11 | 0.418 | 267 | 44.8 | 288 | 4.30 | 10.53 | 5.96 | 3.71 |
| | harvest | | | | | | | | | |

| | | | | | | | | | | |
|---|---|---|---|---|---|---|---|---|---|---|
| EC: Electric conductivity, N : Nitrogen, K: Potassium, Fe: Ferrous, Mn: Manganese, Cu: Copper, Zn: Zinc | | | | | | | | | | |

It is seen that the fertility status in topsoil is less than subsoil, which is showing high nutrient status.

The lower status of all nutrients except Nitrogen which is high due to application of castor cake shows the uptake of the nutrients to the crop which was good as per crop stand and healthy. The yields were 5.6 tons per hectare, which is hign. The wheat crop, is not traditionally grown crop in this agro-climatic zone. Hence by this process of soil excavation and pulverizing into field, a crop not grown in such latertic soils can be grown with good yields with no other chemical soil in the same plot and the grower need not invest in any inputs to increase yields or avert pest attack. The crop yields are also environmentally safe. The fodder straw was also found acceptable to the milch animals.

The nutritional status of grains is:

| WHEAT(Lok-1-MAHYCO) | Values obtained | Standard Values |
|---|---|---|
| Protein | 15.10 g/100g | 12.8 g/100g |
| Moisture | 7.63 g/100g | 7.5 g/100g |
| Yield | 5.60 t/ha | 3.00 t/ha |

| | | |
|---|---|---|
| MAHYCO: Maharastra Hybrid Seeds Company, Jalna, Maharastra, India. Method of Testing: As per AOAC 17th Edition 2000 - Protein : 32.1 .22(984.13). Standard results: As per the recommended package of practices by Maharastra Hybrid Seeds Company, India | | |

As per the package of practices the application of nitrogen is recommended during the flowering stage. However the inventor applied excavated sub-soil through the irrigation water at the rate one tonne per acre with an objective to enhance the yield levels of the crop.

As stated above in the European Patent No.1765051, the inventor has observed that not only yield levels are enhanced, but also the nutrient content of the crop has drastically improved. Thereby the inventor opted to take the lab test of the rice produced through the method earlier claimed and by adding sub-soil through water at the time of flowering stage.

The results obtained from VIMTA LABS from MILLED RICE test report shows that the Content of Vitamin A is about 1242 IU, whereas the normal Carotene content is 0.00 µg as per the NUTRITIVE VALUE OF INDIAN FOODS by C. GOPALAN, B V RAMASHASTRI & S.C.BALASUBRAHMANIAN (Printed by National Institute for Nutrition, Year: 2007). This shows that there is a drastically enhancement of the nutrient levels in the crop grown as per the method disclosed.

Moreover, while the inventor has cultivated the WHEAT with the same method as disclosed with flood irrigation (three flood irrigations with 10 days intervals), the results of the lab shows the content of Vitamin A of about 1370 IU, whereas the normal Carotene content is 64 µg as per the NUTRITIVE VALUE OF INDIAN FOODS by C. GOPALAN, B V RAMASHASTRI & S.C.BALASUBRAHMANIAN (Printed by National Institute for Nutrition, Year: 2007). This shows that there is a drastically enhancement of the nutrient levels in the crop grown as per the method disclosed.

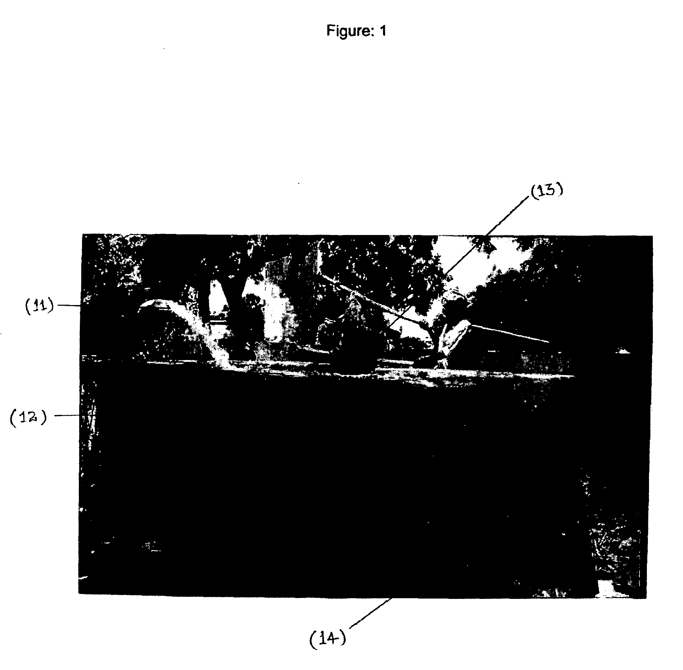

## Claims

1. A process of improving the nutrients of top soil by digging a trench having a certain width and length, in the same land, receiving there from a volume of sub soil, mixing that sub soil in a water supply channel and laying the wet sub soil on the complete land which penetrates into the depleted pores through water and forms as a layer of new wet top soil.

## Amended claims

### Amended claims in accordance with Rule 137(2) EPC.

**1.** : A process of increasing the nutrient contents of soil of an agricultural land by digging a trench in a portion of the agricultural land to obtain a volume of sub soil, mixing the subsoil with water in a water supply channel and laying the wet sub soil on the rest of the agricultural land, so that it penetrates into depleted pores and forms a layer of new wet top soil.

**2.** : A process of increasing the nutrient contents of soil as claimed in claim 1, wherein the process is made during the flowering stage of the crop which enhances the high nutritional values of crops.
